# EUROPEAN PATENT SPECIFICATION

(11) **EP 0 438 041 B1**
(45) Date of publication and mention of the grant of the patent: **02.03.1994**
(21) Application number: 90850408.7
(22) Date of filing: 17.12.1990
(51) Int. Cl.: F16K 5/06, F16K 47/04, F16K 5/10

(54) **Valve Device**
Ventil-Vorrichtung
Dispositif pour vanne

(30) Priority: 19.01.1990 SE 9000186
(43) Date of publication of application: 24.07.1991
(73) Proprietor: Aktiebolaget Somas Ventiler, S-661 00 Säffle (SE)
(72) Inventor: Wangeby, Percy M., S-662 00 Amal (SE); Hubertson, Folke, S-661 00 Säffle (SE)
(74) Representative: Hynell, Magnus

(56) References cited:
- EP-A- 0 043 193
- EP-A- 0 325 846
- WO-A-88/05880
- FR-A- 2 506 420
- US-A- 4 212 321

## Description

### TECHNICAL FIELD

This invention relates to a valve device comprising a valve housing having an inlet, an outlet, and a flow passage therebetween, a valve body with a closure member in the form of a spherical calotte, at least one valve seat in the valve housing, a rotatable shaft for rotating the valve body about an axis of rotation between an open position, in which said closure member does not block the flow passage between the inlet and the outlet, and an open position, in which the closure member of the valve body hinders all flow through said passage by sealing contact between a sealing surface on the closure member and a sealing surface on the valve seat, and attenuating means provided on the valve body within that space having the shape of a part of a sphere which is generated by the contour of the valve body when the valve body is turned about the axis of rotation by the rotatable shaft.

### BACKGROUND ART

A valve device of the above mentioned type is known e.g. through EP-A-43193. A typical feature of this device is that it comprises a plurality of parallel, perforated attenuating plates. As the fluid is pressed through the apertures in the perforated attenuating plates, the plates and their apertures will reduce the pressure step-by-step, so that the sound level is reduced stepwise. The device is comparatively expensive to manufacture, i.a. because the boring of a large number of apertures in the attenuating plates requires expensive machine work.

### BRIEF DESCRIPTION OF THE INVENTION

It is an objective of the present invention to provide a valve device of the type mentioned in the preamble, which does not utilize any plate-shaped attenuating members but which nevertheless gives a good and possibly better attenuating effect than what may achieved by means of plate-shaped attenuating members. Preferably it is a particular objective of the invention to avoid or at least reduce the stepwise character of the pressure reduction which is typical for those devices which are based on plate-shaped, perforated attenuating members and instead to achieve a more stepless reduction of the pressure, which may reduce the sound level further.

Further it is an aim to make it possible to manufacture the attenuating means mainly from rod steel of standard size through simple cutting, bending and welding operations and without any use of expensive shaping tools or extensive machine working such as boring, turning and milling.

Further it is preferably a purpose of an embodiment of the invention that those parts of the attenuating means which face that opening in the valve housing where the valve seat is located shall represent a sector of a circle having its centre on the axis of rotation, which sector of a circle has substantially the same size as the sector of a circle which is represented by the closure member in a plane perpendicular to the axis of rotation.

The invention is defined by what is stated in the appending claim 1.

Further objectives may be achieved therein that the invention is characterized by what is stated in the appending dependant claims.

Further characteristic features, aspects and advantages of the invention will be apparent from the following description of some preferred embodiments.

### BRIEF DESCRIPTION OF DRAWINGS

In the following description of some preferred embodiments, reference will be made to the accompanying drawings, in which
- Fig. 1: is a plan-view of a valve housing and a valve body with a closure member in the form of a spherical calotte and with an attenuating means according to a first embodiment of the invention, some parts of the valve housing being cut away;
- Fig. 2: is a longitudinal sectional view along the line II-II in Fig. 1;
- Fig. 3: is a sectional view through the valve body and the attenuating means along the line III-III in Fig. 2;
- Fig. 4: is a perspective view of the valve body provided with the attenuating means;
- Fig. 5: is a plan-view of a valve body and an attenuating means according to a second preferred embodiment of the invention;
- Fig. 6: shows the second embodiment along a line IV-IV in Fig. 5;
- Fig. 7: is a sectional view along a line VII-VII in Fig. 6;
- Fig. 8: is a plan-view of a valve body according to a third preferred embodiment;
- Fig. 9: is a view along the line IX-IX in Fig. 8; and
- Fig. 10: shows the valve body according to this third embodiment in a sectional view along the line X-X in Fig. 8.

### DESCRIPTION OF PREFERRED EMBODIMENTS

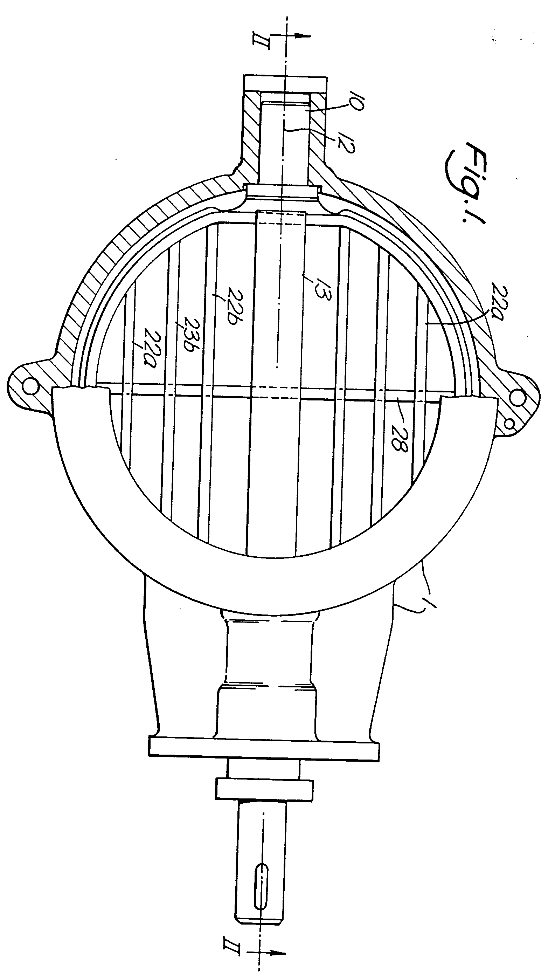

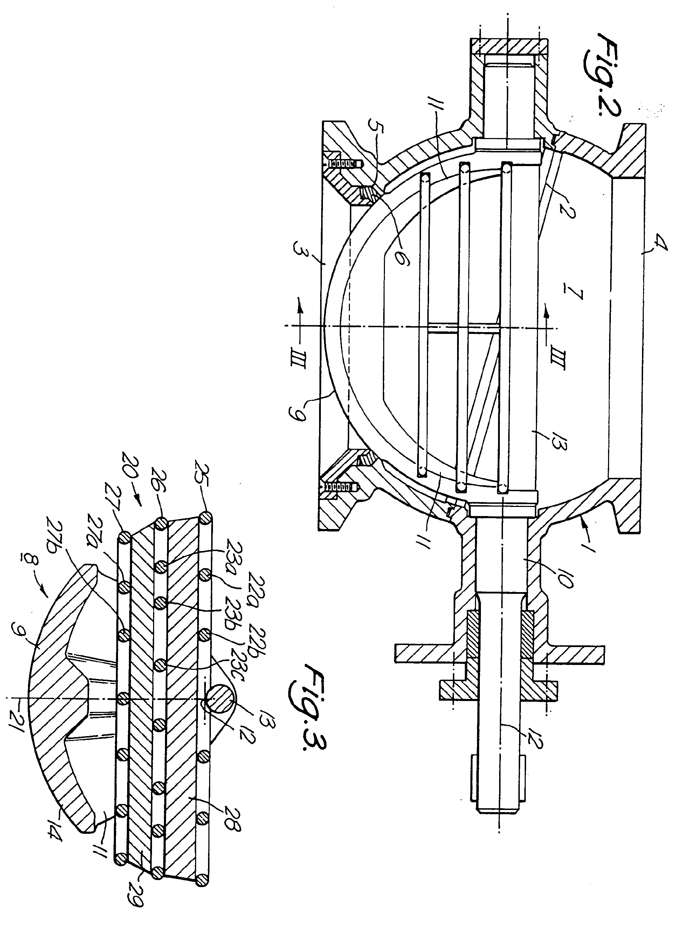

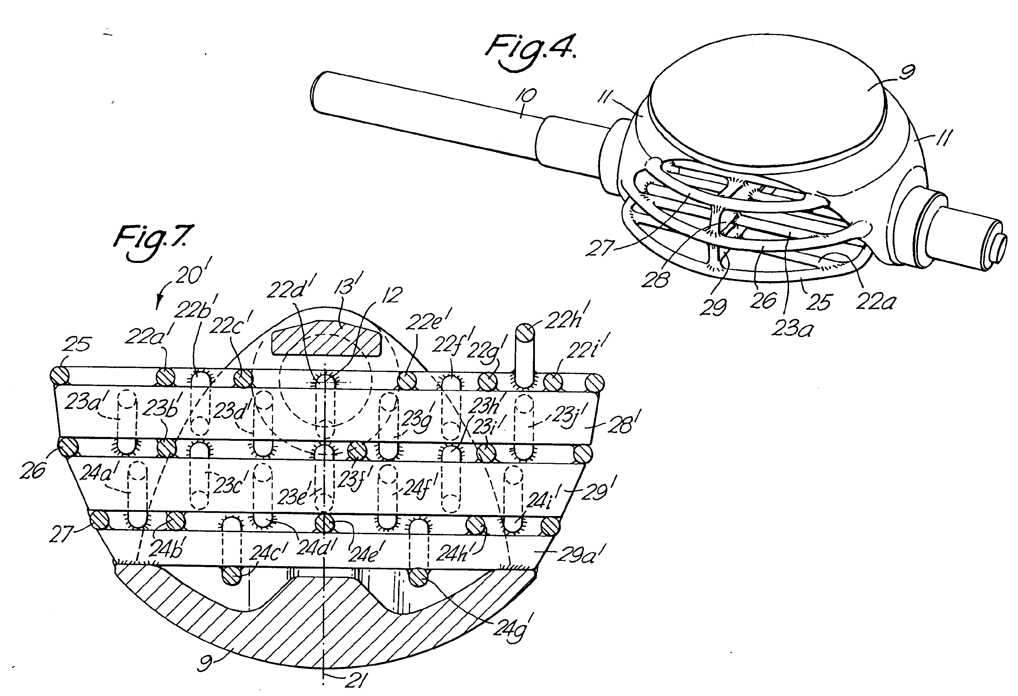

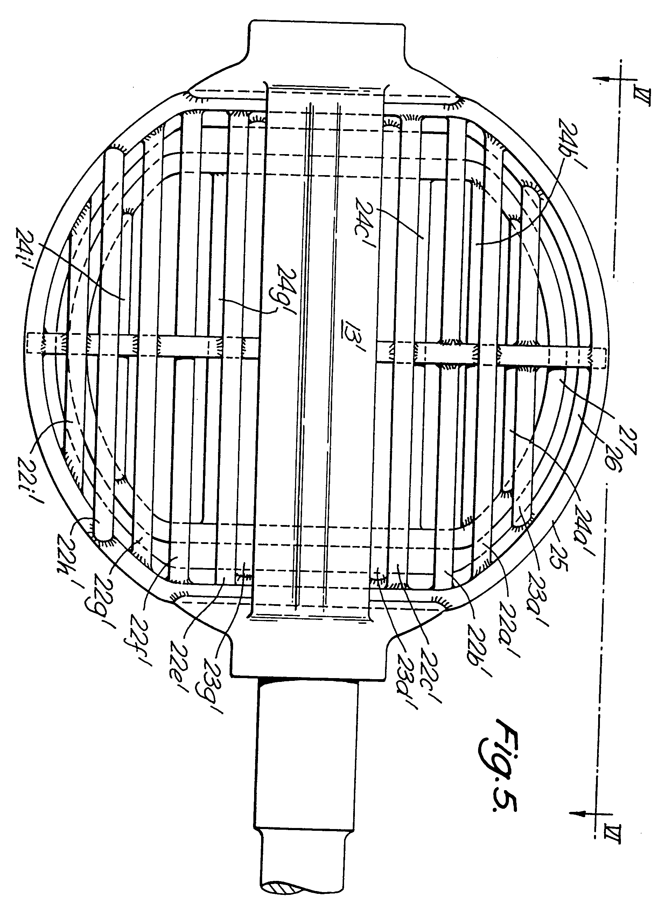

With reference first to Fig. 1-4, a valve housing is generally designated 1. The valve housing 1 can be divided into two parts along a parting line 2. The valve housing has an inlet opening 3 and an outlet opening 4. (The inlet opening 3, however, may also function as an outlet opening and vice versa.) In that part of the valve housing 1 where the inlet opening 3 is located, there is a valve seat 5 having a sealing surface 6. A flow passage in the valve housing between the inlet opening 3 and the outlet opening 4 has been designated 7. In the valve housing 1 there is a valve body 8 with a closure member which in a manner known per se has the shape of a spherical calotte 9, which is connected to a rotatable shaft 10 via two lateral leg portions 11. The axis of rotation of the rotatable shaft 10 has been designated 12. The lateral leg portions 11 are also interconnected through a reinforcing cross rod 13 which is parallel with the axis of rotation 12. The spherical surface 14 of the spherical calotte 9 defines the sealing surface of the closure member, which sealing surface is provided to co-operate with the sealing surface 6 on the valve seat 5.

A sound reducing attenuating means has been designated 20. The attenuating means 20 is symmetrical with reference to a plane 21 which coincides with the axis of rotation 12 and with the centre of the spherical calotte 9. The attenuating means 20 according to the embodiment illustrated in Fig. 1-4 comprises first attenuating members consisting of a plurality of attenuating rods 22a, 22b, 23a, 23b, 23c, 24a, 24b which according to the embodiment are straight and extend in a longitudinal direction which is parallel with said axis of rotation 12 at three different levels counted from said axis of rotation 12 in the spherical space which is generated by the sealing surface 14 of the spherical calotte 9 and the external sides of the lateral leg portions 11 as the valve body 8 is turned about its axis of rotation 12. Further, the attenuating means 20 comprises second attenuating members 25, 26, and 27 which are bent to the shape of circular arcs and provided between the two lateral leg portions 11. The bent rod members 25, 26, 27 together with the lateral leg portions 11 and the spherical calotte 9 form a design having the shape of a basket which defines the contour of the attenuating means 20. The first attenuating members - the rods 22a, 22b, 23a, 23b, 23c, 24a, 24b - are substantially evenly distributed in the said basket so that they sparsely fill the basket. The ends of some of the attenutaing rods, namely those rods which are designated 22A and 23A, are connected by welding to the bent members 25 and 26, respectively, while the ends of the other attenuating rods are welded to the lateral leg portions 11. Further, all attenuating rods are welded to two flat steel rods 28, 29 which are located in a central plane in the said basket perpendicular to said plane of symmetry 21. As is best apparent in Fig. 3, the two flat steel bars 28, 29 are provided between the different levels at which the straight attenuating rods are mounted.

All attenuating members according to the embodiment consist of steel rods having circular cross section. The distance between adjacent rods at the same level are several times larger than the diameter of the rods, and the distance between the levels are at least larger than the diameter of the rods. As a result there is achieved an efficient attenuation of the sound at the same time as the flow through the completely or partly open valve is reduced in a degree which is acceptable.

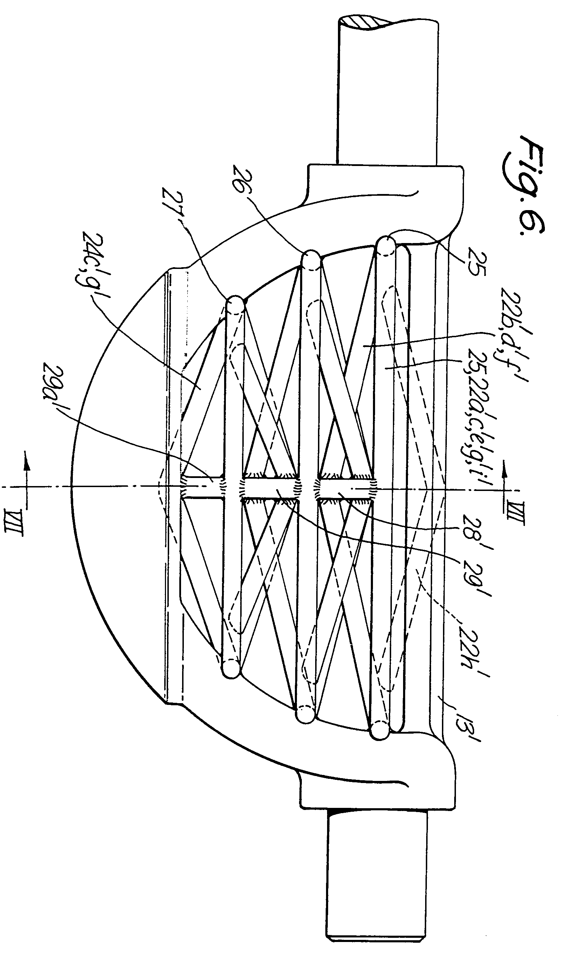

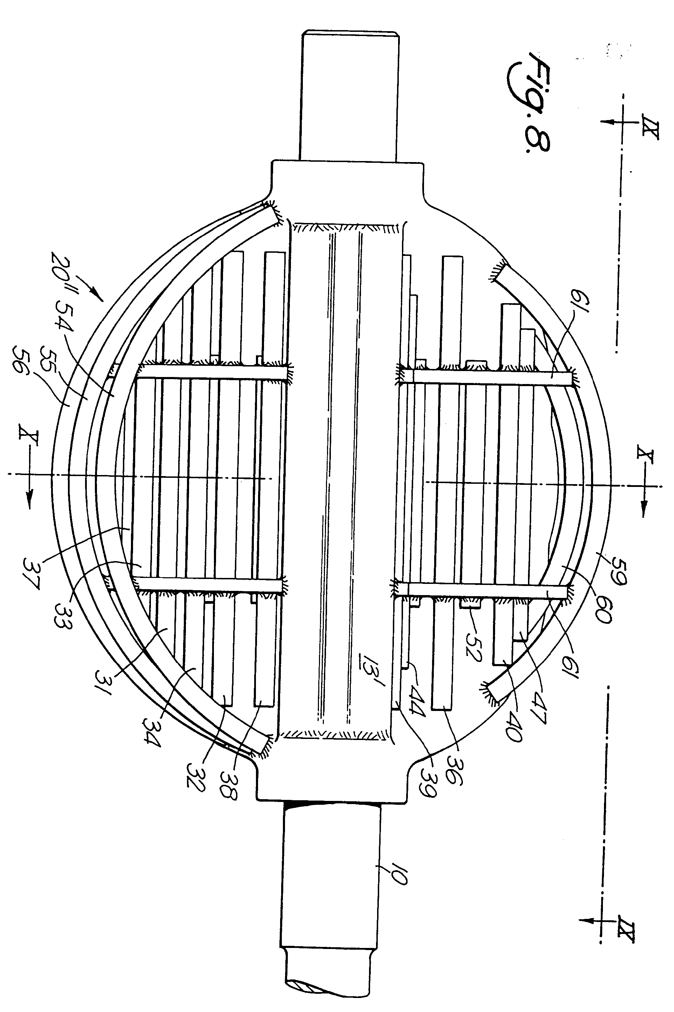

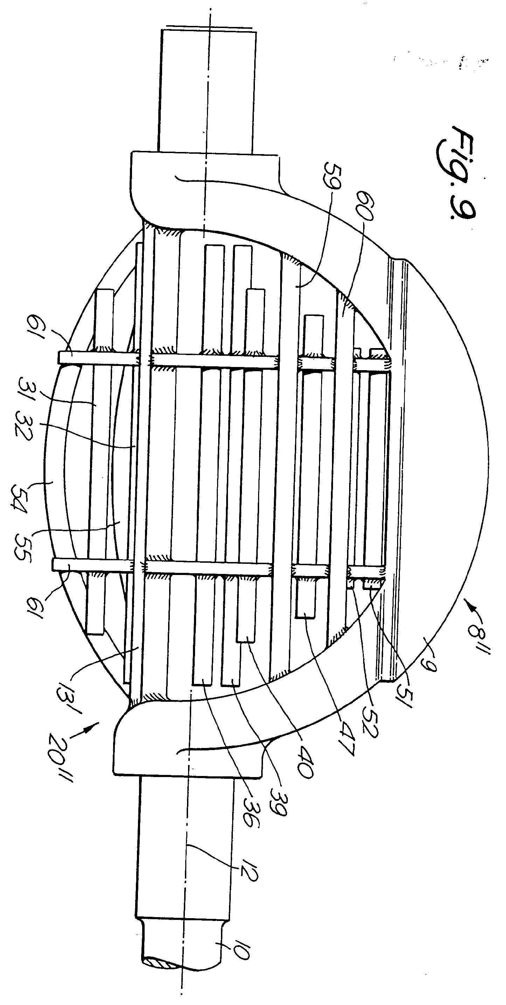

Fig. 5-7 shows an embodiment of a calotte valve having an attenuating means 20'. This attenuating means differs from the previous one therein that not all of the first attenuating members are straight, parallel or provided in coinciding planes at different levels. Instead, these attenuating members are bent alternatingly in a direction towards the calotte 9 and in the opposite direction in planes which are parallel with the plane 21. They are mounted in the same manner as the corresponding rods in the previous embodiment. The bent rods have been designated 22b, 22d', 22f', 22h', 23a', 23c', 23d', 23e', 23g', 23h', 23j', 24a', 24c', 24d', 24f', 24g', 24i', and the straight attenuating rods have been designated 22a', 22c', 22e', 22g', 22i', 23b', 23f', 23i', 24b', 24e', 24h'. Further, there are three supporting flat steel bars 28', 29', and 29a' which make the structure more rigid and are designed so that they fit with the straight rods as well as with the pattern of bendings of the bent attenuating rods. The cross bar 13' is flat. In other respects the attenuating means 20' is designed in the same way as according to the first described embodiment. The purpose of the alternatingly straight and bent attenuating rods is to further increase the attenuating effect, i.e. through a pronounced asymmetry in the arrangement of the attenuating rods, particularly when the valve has a large opening angle or is completely open.

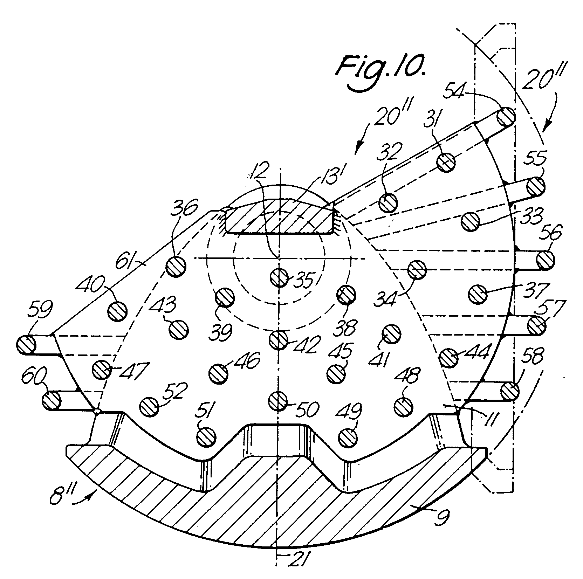

In the embodiment according to Fig. 8-10, the valve body has the same design as in the two previously described embodiments and it is also intended to be used in a valve housing of the same kind as is shown in Fig. 1. The attenuating means, which is designated 20'', however, has an essentially different design. Like the first embodiment, however, the attenuating means comprises on one hand first attenuating members in the form of straight rods, and on the other hand second attenuating members in the form of bent rods. The first, straight attenuating members to the number of twentyone have been designated 31-52.

The second, bent attenuating members are asymmetrically located relative to the plane 21 in the attenuating means 20'' like the first attenuating members 31-52. On that side of the attenuating means 20'' which faces the valve seat 6 (which is indicated by ghost lines in Fig. 10) there are five attenuating members 54-58 which are bent to the shape of circular bows. The two first mentioned bow-shaped members 54, 55 are located in essentially radial planes, said planes coinciding with the axis of rotation 12 of the valve body 8'', while the three bow-shaped members 56, 57, 58 are located in parallel planes which are perpendicular to the plane 21. When the valve is completely open, the bow-shaped member 56 is positioned in the centre of the inlet opening in the valve, while the two bow-shaped members 54, 55, and 57, 58, respectively, are evenly distributed on each side of the central bow-shaped member 56. The whole passage through the valve thus will be filled by the sparsely distributed bow-shaped attenuating members 54-58 in the region of the valve seat 6. On the opposite side of the attenuating means 20'' there are two bow-shaped second attenuating members 59, 60 which are located in planes which are perpendicular to the plane 21 at levels between the axis of rotation 12 and the calotte 9. All the bow-shaped attenuating members 54-60 are secured with their ends through welding to the lateral leg members 11. As in the previous embodiments, the bow-shaped second attenuating members 54-60 together with the calotte 9 and the lateral leg members 11 form a basket, but this basket according to this third embodiment is asymmetric which is seen most clearly in Fig. 9. It is also somewhat "deeper" than according to the two previous embodiments which improves the attenuation efficiency. The attenuation effect also is improved by the strongly irregular pattern of distribution of the first rod-shaped attenuating members 31-52, but by the fact that the attenuating members are comparatively sparsely distributed, the favourable attenuation effect is not gained at the expense of a substantial reduction of the flow through the valve.

The first attenuating members 31-52, which have the shape of straight rods, are provided in the said basket but they are not directly united with the basket. Instead they are mounted in parallel plates 61 which are perpendicular to the axis of rotation 12. Each plate 61 has the essential shape of a semi-circular disk and is provided on each side of a plane of a symmetry X-X between the cross bar 13' and the calotte 9 and are secured by welding to said two members. The cross bar 13' has the shape of a flat beam with the one of the broad sides of the beam facing the axis of rotation 12. Apertures for the attenuating rods 31-52 are provided in the plates 61. The attenuating rods extend through these apertures and are secured by welding on the outer side of the plates 61 with reference to the symmetry plane. The ends of the attenuating rods 31-52 are free. The plates 61 with the attenuating rods 31-52 thus form an attenuating package in the form of an integrated assembled unit which can be manufactured separately and be mounted in the "open basket". This attenuating package thereafter is fixed by welding the disks 61 to the bow-shaped members 54-60 and to the calotte 9, whereafter also the cross bar 13' is mounted and welded to the disks 61. This embodiment therefore offers considerable advantages from a manufacturing point of view in combination with a very good attenuating efficiency, which is due also when the valve is completely open.

The three above described embodiments illustrate that the invention can be designed in various ways within the scope of the appending claims. It should, however, be clear that the possibilities of varying the invention are not limited to the disclosed embodiments. Among other conceivable modifications may for example be mentioned that the attenuation rods may have other cross section than a circular cross section. For example the rods may have the shape of more or less flat rods with substantially rectangular section, preferably having some rectangular standard dimension or a design which otherwise is easy to manufacture. By aligning such flat rods in different directions, further possibilities are created to influence the attenuation efficiency in a favourable way.

## Claims

1. Valve device comprising a valve housing (1) having an inlet (3), an outlet (4), and a flow passage (7) therebetween, a valve body (8) with a closure member in the form of a spherical calotte (9), at least one valve seat (6) in the valve housing, a rotatable shaft (10) for rotating the valve body about an axis of rotation (12) between an open position, in which said closure member does not block the flow passage between the inlet and the outlet, and an open position, in which the closure member of the valve body hinders all flow through said passage by sealing contact between a sealing surface on the closure member and a sealing surface on the valve seat, and attenuating means (20, 20', 20'') provided on the valve body within that space having the shape of a part of a sphere which is generated by the contour of the valve body when the valve body is turned about the axis of rotation by the rotatable shaft **characterized** in that said attenuating means comprises first attenuating members (31-52) consisting of a plurality of attenuating rods, which extend in a longitudinal direction which is substantially parallel with said axis of rotation and at several different levels in said open space with reference to said axis of rotation, that other members are provided to define second attenuating members (54-60) between parts (11) of the valve body which connect the rotatable shaft with the spherical calotte, that said second attenuating members together with said connecting parts (11) of the valve body and said spherical calotte form a substantially spherical basket which defines the contour of the attenuating means, and that the first attenuating members are substantially evenly distributed in and sparsely fill said basket.

2. Valve device according to claim 1, **characterized** in that the mean distance between the first attenuating members are at least three times as large as the thickness of the said first attenuating members.

3. Valve device according to claim 1, **characterized** in the mean distance between adjacent second attenuating members is larger than the thickness of said second attenuating members.

4. Valve device according to any of claims 1-3, **characterized** in that at least the majority of said first attenuating members (31-52) are straight.

5. Valve device according to any of claims 1-3, **characterized** in that at least some of said first attenuating members are bent so that bent portions project in planes which are parallel with a plane which coincides with the axis of rotation and with the centre of the closure member.

6. Valve device according to any of claims 1-5, **characterized** that second attenuating members on one side of the basket are facing that opening in the valve house where the valve seat is provided, when the valve is completely open, and represent a sector of a circle from the axis of rotation which is substantially as large as the sector of a circle which is represented by the closure member.

7. Valve device according to claim 6, **characterized** in that second attenuating members which are provided on the opposite side of the basket represent an essentially smaller sector of a circle than those attenuating members which are provided on the first mentioned side of the basket.

## Patentansprüche

1. Ventilbauelement, bestehend aus einem Ventilgehäuse (1) mit Einlaß (3), Auslaß (4) und einem dazwischenliegenden Durchflußbereich (7), einem Ventilkörper (8) mit Drosselkörper in Form einer gewölbten Schale (9), mindestens einem Ventilsitz (6) im Ventilgehäuse, einer drehbaren Welle (10), mittels derer der Ventilkörper um eine Rotationsachse (12) herum zwischen einer offenen und einer geschlossenen Position hin- und herbewegt werden kann, wobei besagter Drosselkörper in der offenen Position den Durchfluß zwischen Ein- und Auslaß nicht blockiert, während der Drosselkörper in der geschlossenen Position den Durchfluß durch besagten Bereich durch Herstellung eines Dichtungskontaktes zwischen den Dichtungsflächen des Drosselkörpers und des Ventilsitzes vollständig blockiert sowie einer Dämpfungseinrichtung (20, 20', 20''), die sich im sphärischen Raum des Ventilkörpers befindet, der bei der mittels der drehbaren Welle vollzogenen Drehung des Ventilkörpers um die Rotationsachse durch die Ventilkörperkontur gebildet wird und dadurch **gekennzeichnet**, daß besagte Dämpfungseinrichtung eine erste Gruppe (31-52) von Dämpfungsgliedern aus mehreren Dämpfungsstäben umfaßt, die in Längsrichtung im wesentlichen parallel zu besagter Rotationsachse verlaufen und in bezug auf die Rotationsachse auf verschiedenen Ebenen in besagtem freien Raum angeordnet sind; daß zwischen Teilen (11) des Ventilkörpers, die die drehbare Welle mit der gewölbten Schale verbinden, eine weitere Gruppe von Dämpfungsgliedern (54-60) angeordnet ist; daß besagte Dämpfungsglieder zusammen mit besagten Verbindungsteilen (11) des Ventilkörpers und besagter gewölbter Schale einen im wesentlichen kugelförmigen Korb bilden, durch den die Kontur der Dämpfungseinrichtung bestimmt wird und daß die Anzahl der im wesentlichen gleichmäßig in besagtem Korb verteilten Dämpfungsglieder der ersten Gruppe pro Volumeneinheit relativ gering ist.

2. Ventilbauelement gemäß Anspruch 1 ist dadurch **gekennzeichnet**, daß der mittlere Abstand zwischen den Dämpfungsgliedern der ersten Gruppe mindestens dem Dreifachen ihrer Dicke entspricht.

3. Ventilbauelement gemäß Anspruch 1 ist dadurch **gekennzeichnet**, daß der mittlere Abstand zwischen benachbarten Dämpfungsgliedern der zweiten Gruppe größer ist als deren Dicke.

4. Ventilbauelement gemäß den Ansprüchen 1-3 ist dadurch **gekennzeichnet**, daß die Mehrzahl besagter Dämpfungsglieder der ersten Gruppe (31-52) gerade ist.

5. Ventilbauelement gemäß den Ansprüchen 1-3 ist dadurch **gekennzeichnet**, daß zumindest ein Teil besagter Dämpfungsglieder derart gebogen ist, daß gebogene Abschnitte der Dämpfungsglieder auf Ebenen hinausragen, die parallel zu der Ebene verlaufen, auf der die Rotationsachse und der Mittelpunkt des Drosselkörpers liegen.

6. Ventilbauelement gemäß den Ansprüchen 1-5 ist dadurch **gekennzeichnet**, daß die Dämpfungsglieder der zweiten Gruppe auf einer Seite des Korbes bei vollständig geöffnetem Ventil derjenigen Öffnung des Ventilkörpers gegenüberliegen, an der sich der Ventilsitz befindet und dabei den Sektor eines Kreises von der Rotationsachse bilden, der im wesentlichen so groß ist wie derjenige Kreissektor, der vom Drosselkörper gebildet wird.

7. Ventilbauelement gemäß Anspruch 6 ist dadurch **gekennzeichnet**, daß die Dämpfungsglieder auf der gegenüberliegenden Seite des Korbes einen wesentlich kleineren Kreissektor bilden als die Dämpfungsglieder auf der zuerst erwähnten Seite des Korbes.

## Revendications

1. Dispositif pour vanne comprenant un logement de vanne (1) qui présente une entrée (3), une sortie (4) et un passage d'écoulement située entre elles, un corps de valve (8) qui comprend un organe de fermeture ayant la forme d'une calotte sphérique, au moins un siège de vanne (6) disposé dans le logement de vanne, un arbre tournant (10) pour faire tourner le corps de valve autour d'un axe de rotation (12) entre une position d'ouverture, dans laquelle ledit organe de fermeture ne bloque pas le passage de l'écoulement entre l'entrée et la sortie, et une position de fermeture dans laquelle l'organe de fermeture du corps de valve empêche tout écoulement à travers ledit passage par réalisation d'un contact étanche entre une surface d'étanchéité de l'organe de fermeture et une surface d'étanchéité du siège de vanne, et un moyen d'atténuation (20,20',20'') prévu sur le corps de vanne à l'intérieur de l'espace en forme de partie de sphère qui est produite par le contour du corps de vanne lorsque le corps de vanne tourne autour de l'axe de rotation par l'effet de l'arbre tournant, caractérisé en ce que ledit moyen d'atténuation comprend des premiers organes d'atténuation (31-52) consistant en une série de tiges d'atténuation, orientées dans une direction longitudinale qui est sensiblement parallèle au dit axe de rotation et à plusieurs niveaux différents dans ledit espace ouvert par rapport au dit axe de rotation, en ce que d'autres organes sont prévus pour déterminer de seconds organes d'atténuation (54,60) entre des parties (11) du corps de vanne qui relient l'arbre tournant à la calotte sphérique, en ce que lesdits seconds organes d'atténuation, avec lesdites parties de liaison (11) du corps de vanne et ladite calotte sphérique, forment un panier sensiblement sphérique définissant le contour du moyen d'atténuation, et en ce que les premiers organes d'atténuation sont disposés pratiquement de façon uniforme dans ledit panier et remplissent peu abondamment celui-ci.

2. Dispositif pour vanne selon la revendication 1, caractérisé en ce que la distance moyenne séparant les premiers moyens d'atténuation est au moins trois fois plus grande que l'épaisseur des dits premiers moyens d'atténuation.

3. Dispositif pour vanne selon la revendication 1, caractérisé en ce que la distance moyenne séparant des seconds organes d'atténuation adjacents est supérieure à l'épaisseur des dits seconds organes d'atténuation.

4. Dispositif pour vanne selon l'une quelconque des revendications 1 à 3, caractérisé en ce que la majorité au-moins des dits premiers organes d'atténuation (31-52) sont rectilignes.

5. Dispositif pour vanne selon l'une quelconque des revendications 1 à 3, caractérisé en ce que certains au moins des dits premiers organes d'atténuation sont courbés de façon que des parties courbées fassent saillie dans des plans parallèles à un plan qui coïncide avec l'axe de rotation et avec le centre de l'organe de fermeture.

6. Dispositif pour vanne selon l'une quelconque des revendications 1 à 5, caractérisé en ce que des seconds organes d'atténuation situés d'un coté du panier font face à l'ouverture ménagée dans le logement de vanne où est prévu le siège de vanne, lorsque la vanne est complètement ouverte, et représentent un secteur circulaire partant de l'axe de rotation qui est pratiquement aussi grand que le secteur circulaire constitué par l'organe de fermeture.

7. Dispositif pour vanne selon la revendication 6, caractérisé en ce que de seconds organes d'atténuation, qui sont prévus sur le côté opposé du panier, représentent un secteur circulaire qui est essentiellement plus petit que les organes d'atténuation prévus du côté mentionné en premier du panier.
